Europäisches Patentamt

European Patent Office

Office européen des brevets

(19)

(11) Publication number: **0 382 426**

**A2**

# EUROPEAN PATENT APPLICATION

(12)

(21) Application number: **90301115.3**

(22) Date of filing: **02.02.90**

(51) Int. Cl.5: **G01N 27/26**

(30) Priority: **06.02.89 US 307052**

(43) Date of publication of application:
**16.08.90 Bulletin 90/33**

(84) Designated Contracting States:
**CH DE DK FR GB IT LI NL SE**

(71) Applicant: **APPLIED BIOSYSTEMS, INC.**
**850 Lincoln Centre Drive**
**Foster City California 94404(US)**

(72) Inventor: **Yuau, Pau**
**1249 Johnson Avenue**
**San Jose, California 95129(US)**
Inventor: **Hsi, Kuo**
**12 N. Idaho, No. 5**
**San Mateo, California 94401(US)**
Inventor: **Raysberg, Yefim**
**1157 Vuelta Olivos**
**Fremont, California 84538(US)**
Inventor: **Kerila, Larry**
**326 Capitol Village**
**San Jose, California 95126(US)**

(74) Representative: **West, Alan Harry et al**
**R.G.C. Jenkins & Co. 26 Caxton Street**
**London SW1H 0RJ(GB)**

(54) **Micro-preparative electrophoresis apparatus.**

(57) Micro-preparative gel electrophoresis apparatus
with continuous elution has quickly interchangeable
gel columns. Increase in electric field intensity at the
elution interface is managed by change in cross
sectional area, and bubbles are avoided through
pressurization of buffer systems using Helium gas
and placement of the high voltage electrode at the
elution end of the gel column downstream from the
elution chamber. The apparatus avoids unmanagea-
ble heating effects through the micro-scale of com-
ponents, and the column itself is small enough that
its temperature can effectively be controlled using a
Peltier heating/cooling element. Computerized con-
trol for automatic electrophoresis, on-line detection,
and sample collection is provided.

# MICRO-PREPARATIVE ELECTROPHORESIS APPARATUS

The present invention is in the field of apparatus and processes for the analysis of primarily biological material samples, separating and identifying species such as deoxyribonucleic acid (DNA) fragments and proteins; and for collecting separated samples. The invention relates more particularly to electrophoresis apparatus and process, and to continuous elution devices and methods used with electrophoresis.

The separation of macromolecules from biological samples by electrophoresis techniques has been a relatively common practice for at least twenty years, and many different devices and techniques have been developed to accomplish various desirable ends. Early techniques involved imposing an electric field across a thin slab of gel and placing a sample of material to be analyzed on one end of the gel. Macromolecules exhibit varying mobility in a properly prepared gel depending on a number of variables, such as an electric charge acquired in the electric field, size and relative mass of the different species, and shape of the macromolecule species, which may be influenced by a strong electric field. Because of these variations, different species will move into and through a gel at differing rates, forming distinct bands as they move through the gel, thus accomplishing separation. The separate bands are sometimes called fractions, as they are each a portion of the original sample.

After separation is accomplished in a gel, the electric field may be discontinued and the gel removed from any support that is used. There are techniques for rendering the fractions identifiable, such as staining and radioactive tagging, so an electropherogram may be recorded. By comparing such results with emperical results produced from known mixtures and concentrations of such materials, the particular material of each fraction from an experimental sample may be identified.

Chromatography techniques have been adapted to the elucidation of samples produced by electrophoresis. UV light may, for example, be focused through a gel and traversed along the axis orthogonal to sample bands, and UV sensitive receptors on the opposite side of the gel used to produce the needed information as to (primarily) distance between bands relative to time, related to all the other variables. Techniques and apparatus have been further developed to scan a gel column during electrophoresis, sensing bands as they pass a point in the gel, which may be correlated with other variables to provide needed information. These techniques are qualitative, neither saving separated samples nor quantifying the information. It is desirable, too, to discover the relative and absolute amounts of materials in an original sample.

Early techniques for saving and performing quantitative analysis on separated samples involved slicing gel samples to separate bands, and dicing, crushing, or grinding. Also fractions can typically be removed from the gel for analysis by eluting with buffering agents.

More recently apparatus and techniques have been developed for continuous elution, in which a gel column terminates at an elution chamber through which a buffer solution may be continuously passed. The gel column is typically separated from the elution chamber by a filter membrane, and electrodes are positioned near each end of the column immersed in buffer. Macromolecules in bands are electro-eluted off the end of the gel column and into the buffer and are carried away in the buffer stream. Typically the elution buffer stream is saved in a number of containers, each container being filled for a fixed amount of time, and analytical techniques are later applied to the collected fractions.

A discussion of preparative gel electrophoresis with continuous elution is presented by Stephan Nees in Chapter 6 of Electrophoresis and Isoelectric Focusing in Polyacrylamide Gel, Edited by R. C. Allen and H. R. Maurer. Published by deGruyter, Berlin, New York, 1974, Pp. 189-198. Another treatment of the subject is by Z. Hrkal in Chapter 13 of Electrophoresis, Edited by Z. Deyl, Published by Elsevier Scientific, Amsterdam, Oxford, New York, 1979, Pp. 299-306.

There are many problems remaining in preparative gel electrophoresis with continuous elution. For example, in many cases the equipment is more complicated and more massive than that to be used for analytical electrophoresis. That is because the separated species are to be recovered and saved, rather than simply identified, and there is often a motivation to handle large quantities of material at as high a rate as possible.

A critical consideration when continuous elution is used with preparative gel electrophoresis is the transition of the sample bands from the gel column into the elution buffer. The interface must present no impediment to the macromolecules traversing from the gel into the buffer, otherwise the separation pattern will be distorted. Also, the bands in the gel must be uniform and straight at the point that the transition occurs. A distorted pattern affects the purity of samples collected by capturing the elution buffer stream in separate containers. If the separate bands do not pass into the elution buffer quickly and cleanly, there may not be a total separation in the buffer stream, and one fraction may contaminate another,rendering analysis and identification difficult or impossible.

It is desireable for the same goals as stated above, good resolution of fractions in the elution buffer stream, that the elution chamber design permit no "dead" space where macromolecules may collect and not be promptly swept away in the elution stream. Any such trapping of molecules leads to poor resolution and the possibility of contaminating one fraction with material from another. Macromolecules may also be trapped if they migrate too rapidly across the elution buffer stream, by becoming attached to internaal surfaces of the apparatus or other components. The shape of the buffer chamber, the rate of flow of buffer, the shape and geometry of the chamber, and the positions and entrance and exit angle of buffer inlet and outlet ports can be critical.

Another potential problem is Joule heating that takes place as a result of passing a current through the buffers and gel. Heat effects can change the characteristics of the gel and therefore the mobility of macromolecules through the gel. Temperature gradients and fluctuations can also cause distortions of elements of the apparatus and of the gel, which can in turn distort the bands.

Most of the problems discussed become more serious with large-scale preparative devices, while a need has emerged for preparative devices on a smaller scale. One of the critical uses of such apparatus now is the separation of material produced by new biological techniques, such as recombinant DNA techniques. In many of these new techniques, the amount of material produced at any one time is quite small, and massive preparative apparatus is not useful. Also, even though the amount of such material may be small, the expense may not be so, and the material is often quite precious. With small samples worth a lot of money, it is highly desirable that the device used for separation be effecient, simple, and relaible. What is needed is a high-performance, continuous elution apparatus and methods to perform preparative gel electrophoresis on a small scale, such that the apparatus can be easily portable, simple to use, and results may be quickly obtained. A small-scale apparatus will be suitable for the preparative applications where the original samples are small, and will also allow improvements to be made to solve many of the problems that plague larger-scale and more complicated apparatus.

In accordance with preferred embodiments of the invention, apparatus is provided for performing preparative gel electrophoresis with continuous elution and with accuracy and flexibility not achievable with previously available apparatus. In a preferred embodiment a desirable increase in electrical field intensity is achieved by adjusting the cross sectional area of the elution chamber to be equal to or less than the cross sectional area of the gel column. Apparatus is also provided to allow gel columns to be quickly and conveniently changed, so that gel casting and other column preparation may be done off-line and columns of differing length and differing gel diameter may be substituted for different analytical purposes.

In the preferred mode, on-line detection is included, which is made useful by the small features and simplicity of the apparatus of the invention. Contamination of samples by electrolysis products and bubbles formed at electrodes is avoided in the elution stream by unique design and placement of the electrode filament in the elution stream, and also by a unique method of driving buffer flows by pressurization with inert gas. Provision is made for automatic performance of electrophoretic procedures through computerized control, including recording of sample spectra and saving discrete sample microvolumes of eluted material in elution buffer.

Fig. 1 is a block diagram showing an organization of the apparatus of the invention in a preferred embodiment.

Fig. 2A is an elevation view, partially in section, showing elements of an electrophoresis apparatus according to a preferred embodiment of the invention.

Fig. 2B is an elevation view, partially in section, showing elements of an electrophoresis apparatus according to an alternative preferred embodiment of the invention.

Fig. 2C is an elevation view of elements for holding gel tubes in a preferred embodiment of the invention.

Fig. 3 is a section view showing an elution block according to a preferred embodiment.

Fig. 4 is a section view showing an interface between a gel tube and an elution chamber in a preferred embodiment of the invention.

Fig. 5 is a further enlargement of the region shown in Fig. 4, showing details of electric field management according to the invention.

Fig. 6 is a record of sample detection for a separation of proteins according to their molecular weight.

Fig. 7 is a record of a separation of proteins in non-dissociating buffer system.

Fig. 8 is a record of an on-line activity assay performed by the apparatus of the invention, with lactate dehydrogenase (LDH) as the object of the assay.

Fig. 9 is a record showing the result of a use of the apparatus of the invention to separate synthetic oligonucleotides in denatured PAGE system.

Fig. 10A is a record of detection of separation of large double-stranded fragments of native DNA accomplished in the apparatus of the invention.

Fig. 10B is a record of the use of the invention to accomplish analytical agarose gel electrophoresis on precipitated fractions obtained in the procedure from Fig. 10A.

Fig. 11 is a perspective view of a fraction collection system used in a preferred embodiment of the invention.

Fig. 12 shows a control panel in a preferred embodiment for an operator interface.

Fig. 13 is a diagram of menus used with the control system in a preferred embodiment.

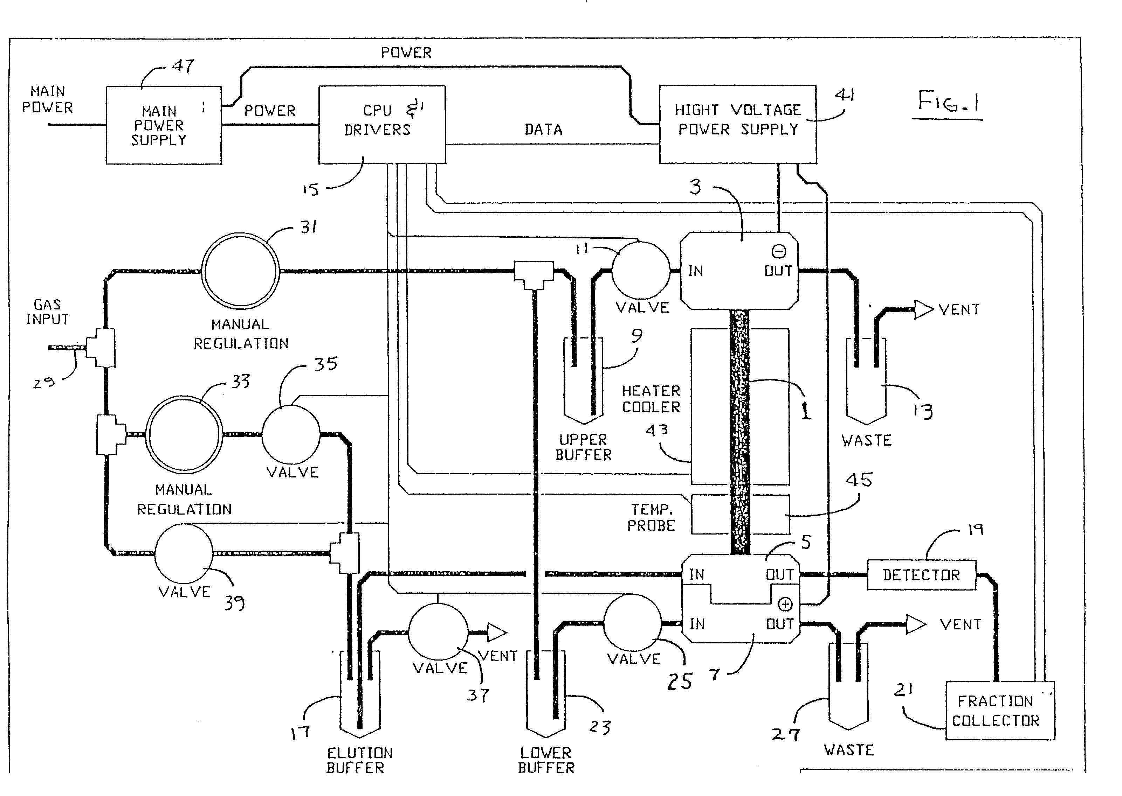

Fig. 1 is a schematic of a preparative gel electrophoresis system according to a preferred embodiment of the invention, including on-line detection and direct recovery of samples. This system is much smaller in scale than is usually used for preparative purposes, and is referred to also as a micro-preparative system. In this specification, the system will be referred to frequently as the HPEC system, for High Performance Electrophoresis Chromatography System. A gel tube 1 is filled with a gel. Polyacrylamide and agarose are two gels that are commonly used. Tube 1 extends between an upper block 3 and an elution block 5. The elution block is attached to a lower block 7. The functions of the elution block and the lower block could be incorporated into a single lower block. The two separable blocks is preferable for manufacturing and cleaning purposes.

In the preferred mode, there are three buffers circulated in the system. An upper buffer is supplied from an airtight reservoir 9 through an electrically operated valve 11 to the upper block, where it wets the upper end of the gel column, exits the upper block, and is collected in buffer waste container 13. Valve 11 is operated by a computerized control system 15 in the preferred embodiment, permitting buffer flow to be controlled by pre-programmed information. An elution buffer for entraining eluted fractions is supplied from an airtight reservoir 17, passes through elution block 5, where it passes also through an elution chamber (not shown in Fig. 1) wetting the lower end of the gel column, passes through an on-line detector 19, and then goes to a fraction collector 21. A lower buffer is supplied from an airtight reservoir 23 through a valve 25, also computer controlled, and passes through lower block 7, exiting to a buffer waste container 27. Both waste containers are vented. A gas under pressure enters manifolding connected to the buffer chambers at point 29 for pressurizing the buffer reservoirs. The gas is typically helium, but other gases, preferably inert, may be used. A manually operated gas pressure regulator 31 regulates the pressure supplied to buffer reservoirs 9 and 23. The upper and lower buffers flow at a flow rate determined by the sizes of the passages through the upper and lower blocks, and by the amount of gas pressure supplied over the buffer in the reservoirs when valves 11 and 25 respectively are opened.

The flow of elution buffer is controlled somewhat differently. A manually operated regulator 33 may be used to control pressure over buffer in reservoir 17, and gas is fed to the reservoir through a valve 35 that is also computer controlled. A vent from reservoir 17 is opened and closed through a computer controlled valve 37. When valve 35 is open and valve 37 is closed, elution buffer will flow at a rate determined in part by the geometry of the elution buffer path and the pressure controlled by regulator 33. Flow can be quickly stopped by opening vent valve 37. A bypass gas valve 39, also computer controlled in the preferred embodiment, may be used for bypassing regulator 33 and applying the full pressure of the gas supply over the elution buffer in reservoir 17 (with vent valve 37 closed). This will supply a maximum flow of elution buffer for functions such as purging the passages through the elution block and the detector.

A high voltage power supply 41 has one lead connected to an electrode (not shown in Fig. 1) in upper block 3, and this electrode is immersed in the upper buffer which wets the upper end of the gel tube. The other lead of power supply 41 is connected to an electrode in lower block 7, and this electrode (not shown in Fig. 1) is immersed in the lower buffer, which is intimate with the elution buffer that wets the lower end of the gel tube. Power supply 41 is controlled in the preferred embodiment by computerized control system 15, which can vary the voltage supplied as well as turn the high voltage output off and on. A voltage may be imposed by the power supply across the ends of gel column 1 providing the driving force for electrophoresis.

A temperature control apparatus 43 surrounds the gel column in the preferred embodiment and is controlled by the computerized control system. A temperature sensor 45 senses the temperature of the gel compartment and sends the information back to the computerized control system. The temperature control apparatus has Peltier heating/cooling elements that are used when needed to supply heat to or remove heat from the gel column to provide operation under stable and controlled temperature. Alternatively, the entire electrophoresis apparatus may be enclosed in an environmental chamber, and gas lines, electrical leads, and buffer plumbing may pass through walls of the the environmental chamber. A main power supply 47 supplies power to all of the electrically operated and controlled elements.

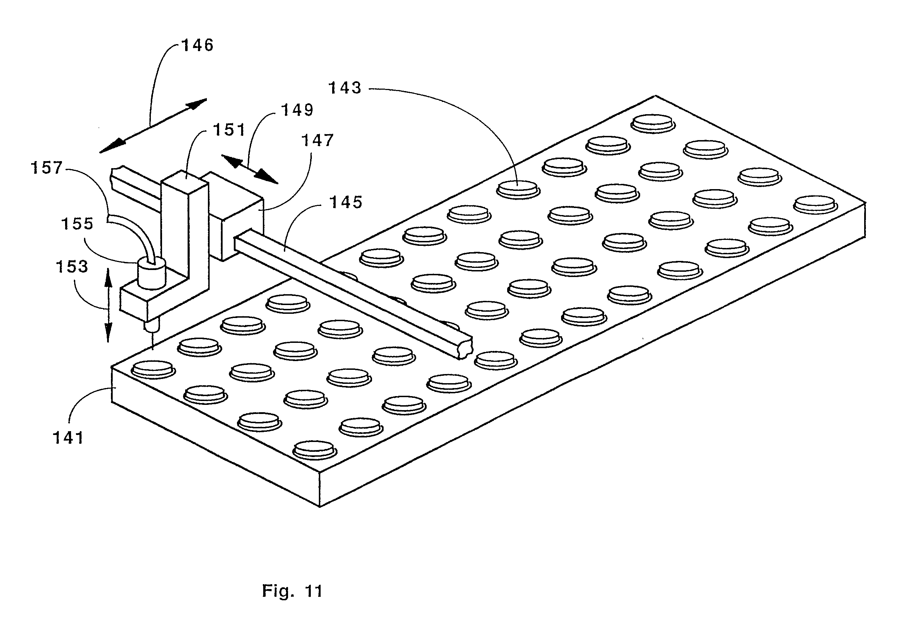

Fig. 11 shows some features of fraction collector 21. A tray 141 holds a plurality of vented microcentrifuge tubes 143, and holes in the tray to hold the tubes are arranged in a rectangular matrix. In the preferred embodiment the matrix is 10 positions wide and 15 positions long (150 tube positions) although fewer are shown in Fig. 11. A crossbeam 145 rides on side tracks (not shown) and is driven over the length of the tray matrix in the direction of arrow 146 by stepper motors (not shown). A carriage 147 rides along crossbeam 145 in the direction of arrow 149 driven by a stepper motor (not shown) mounted on the carriage. A vertical slide represented by element 151 is operated by an actuator (not shown) in the direction of arrow 153, and the vertical slide carries a needle arrangement 155 which is connected by flexible tubing 157 to the eluent stream from the on-line detector. The X-Y-Z motions of the fraction collector crane are controlled by the computerized control system under programmable control, and may alternatively be controlled by an operator in a manual mode.

In typical operation, during electrophoresis, the crane finds a first tube position, lowers the eluent needle, piercing that tube (typically the front row, left), and eluent is expelled into that tube for a preprogrammed time interval. Then the needle is moved to a second tube and eluent is expelled for the same time interval. This action is repeated in a programmed sequence until the electrophoresis run is finished or until all the tube positions are used.

To make a sample run, a sample for separation is introduced at the upper end of gel column 1. A program is initiated then in the computerized control system that opens the valves in a programmed sequence, applies and controls the voltage across the gel, operates the temperature control, operates the detector when required, and moves the fraction collector, to accomplish electrophoretic separation, detection, and sample collection automatically. Alternatively, functions may be initiated and controlled by operator inputs to the computerized control system in an interactive manner by an operator.

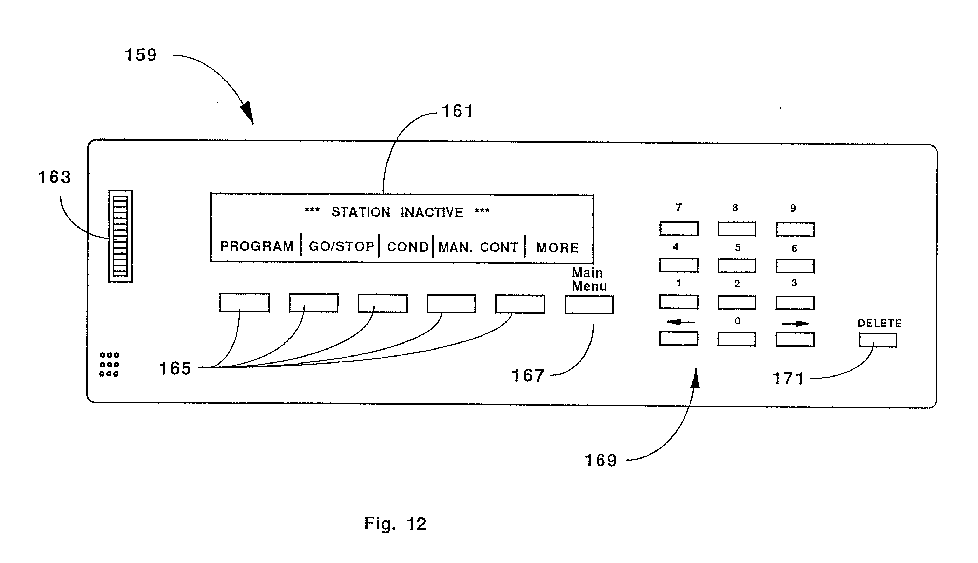

Fig. 12 shows a keyboard and display unit 159 for operator interface with the HPEC in the preferred embodiment. Readout from the control system is via an LCD display 161 with two lines. A thumbwheel 163 is used to adjust the LCD display for optimum viewing. There are five soft-keys 165 for operator input, and in various menu modes the soft key labels are given on the second line of the LCD display. A sixth key 167, labeled Main Menu returns control and the display to a Main Menu. A twelve-key numeric keypad includes the numerals 0 through 9 and a left and a right arrow. A separate key 171 to the right of the numeric keypad is for deletion of entries as desired.

The control system is organized by menus which display messages on the two line LCD display. In some menus there are programmable fields, and an insertion cursor (underline symbol) on the LCD indicates where entries may be made, either with labeled softkeys or by selection from the numeric keypad. The insertion cursor is moved by use of the left and right arrow keys.

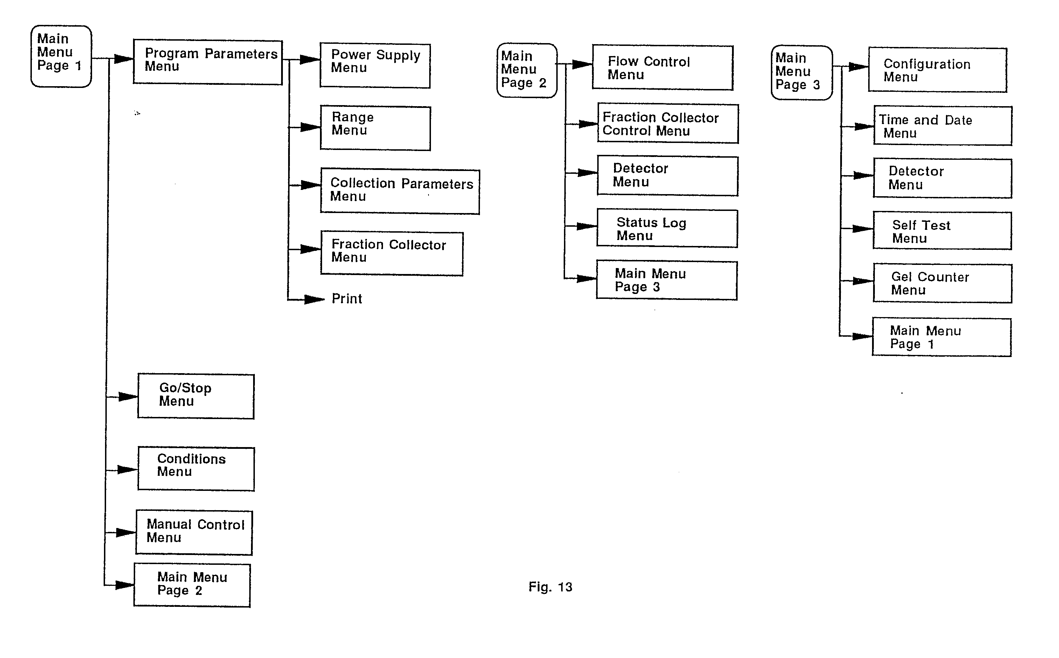

Fig. 13 is a hierarchy of the control menus. The main menus are paths to the specific control menus, and transfer from one to another is by use of softkeys. Electrophoresis parameters may be chosen and set from the program parameters menu. Parameters that may be set are power supply, power supply range, and collection and fraction collector values. The Go/Stop Menu allows electrophoresis to be started, paused, or aborted. The Conditions Menu is for displaying the run conditions, including the time until the end of the run; the voltage, current and power through the electrophoresis column; the gel region temperature; and the absorbance reading.

The Manual Control Menu allows immediate control of the power supply, fraction collector, gel tube temperature, and the printer. The Flow Menu allows control of buffer flows. The Fraction Collector Menu allows the position of the needle at the fraction collector matrix to be manually controlled. The Detector Menu is used for selecting detector parameters. The Status Log Menu reports system errors to the operator. The Configuration menu is for configuring the printer, and to activate and deactivate a fraction collector tube detection system, through which the presence or absence of a collector tube may be sensed, and appropriate action taken.

The Time and Date Menu is for displaying and altering the time and date associated with the HPEC and the runs made with the HPEC. The Self Test Menu is used to verify proper performance of the electrical and mechanical elements of the HPEC. The Gel Counter

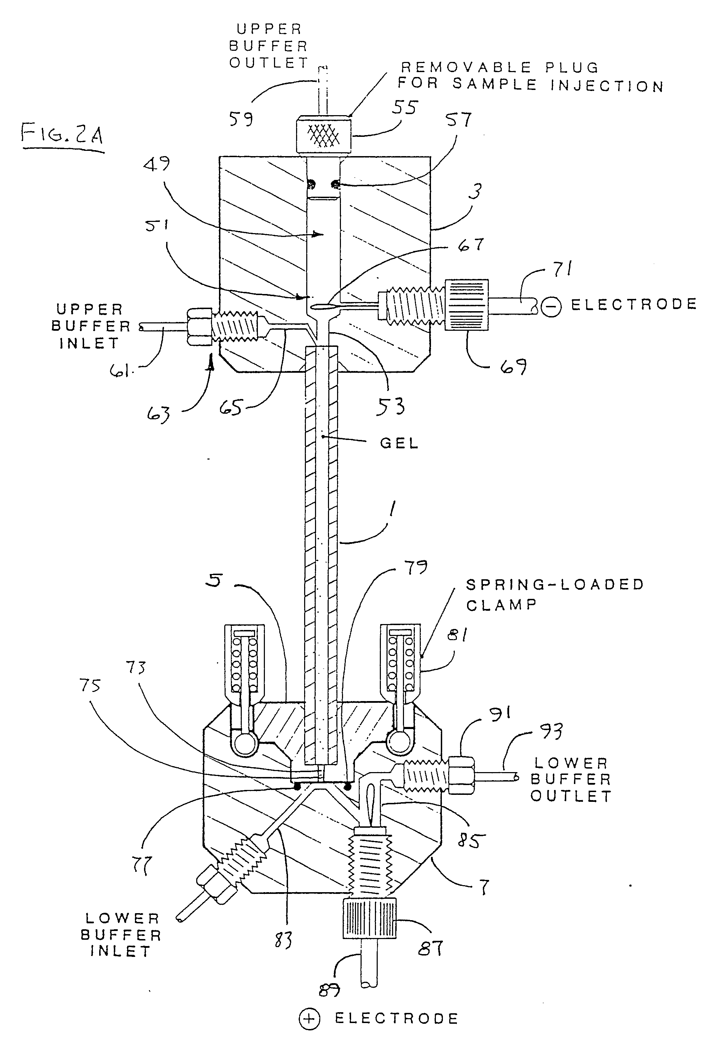

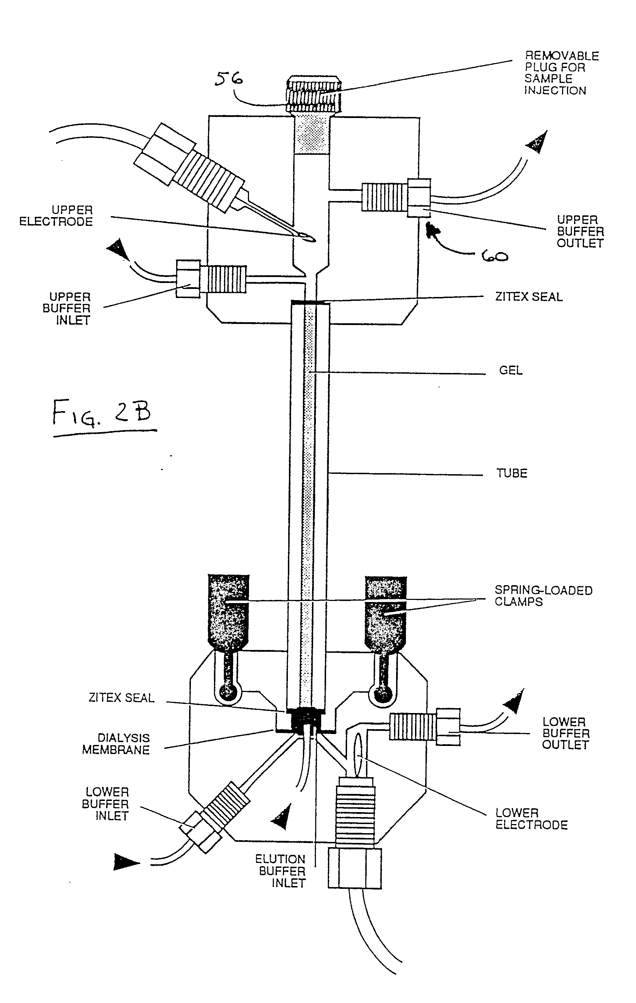

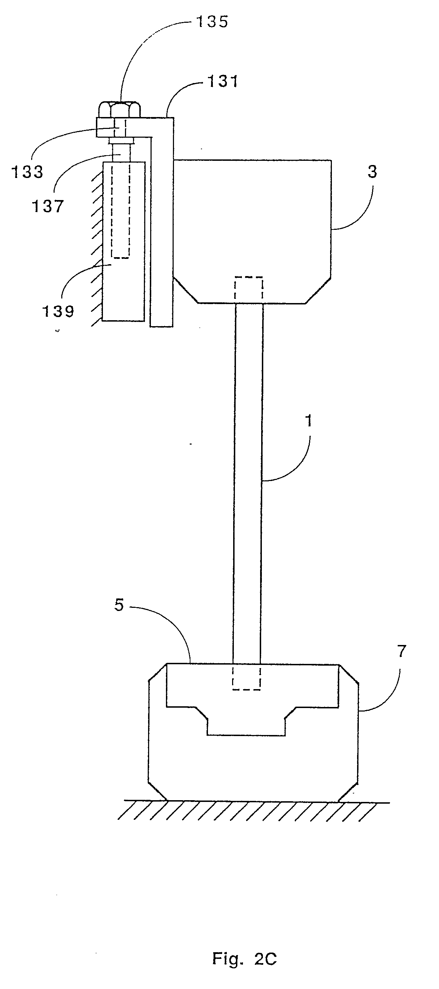

Menu is used to monitor the gel usage to help determine when a gel should be changed. Fig. 2A is a more detailed view of the assembly and arrangement of gel column 1, upper block 3, elution block 5, and lower block 7 in the preferred embodiment, shgwing elements not shown in Fig. 1. Gel column 1 is a pyrex glass tube of about 8 mm. outside diameter, and either 1 mm., 2.5 mm. or 3.5 mm. inside diameter. Larger diameters may beused, but care must be taken to insure that the diameter of the gel column not become so large that excessive heating becomes a problem, or that the diameter difference between the gel column and elution chamber cause other problems. In the preferred embodiments the length of the gel tube may vary typically from about 5 cm. to about 20 cm. The choice of inside diameter and length is made to maximize resolution for the type of samples to be separated. Although it isn't apparent in Fig. 2, the tube ends are typically tapered by about one-half degree for about .5 mm. from each end on the OD to form an effective seal with the openings in the upper block and the elution block into which they fit. The openings in the blocks for the tube typically have a matching taper.

A piece of Zitex filter membrane (not shown) about 8 mm. in diameter by 8 mils thick is placed between the end of the tube and the block on each end when assembled. The filter membrane helps to provide a seal and to keep the gel column in place in the tube, and provides no impediment to the passage of macromolecules in operation.

In the preferred embodiment, the three blocks are made of clear acrylic, although there are other suitable materials, such as pyrex and polycarbonate, for example. The fact of transparency provides a clear view to internal details. Upper block 3 has, in addition to the opening for the gel tube, an inlet for the upper buffer, an opening to mount an upper electrode, and a passage 49 substantially in line with the gel tube opening. Passage 49 has two regions of different diameter, an upper region 51 of about 8 mm. diameter and a lower region 53 of diameter equal to the inside diameter of the gel tube. The upper end of passage 49 is closed with a removable plug 55 that has an o-ring seal 57, and a central opening for a tubing 59 which serves as an outlet for the upper buffer solution. The upper buffer solution enters the upper block via tubing 61 into a passage 65 within block 3, and the interface is a miniature threaded tube fitting 63.

Passage 65 changes direction in the block and opens into narrow passage 53 onto the top of the gel column. Buffer solution entering through the passage wets the top of the gel column directly, which helps to ensure sufficient ion exchange and constant current through the gel column in operation. The diameter of passage 65 in the preferred embodiment is about .8 mm. Upper buffer solution travels upward in passage 49 and exits through plug 55 and tubing 59.

An electrode 67, in the preferred embodiment a loop of platinum wire, extends into the upper buffer stream just above the point where passage 49 narrows from 8 mm. to the diameter of the gel column (the inside diameter of the gel tube). The electrode is held in a threaded fitting 69, and electrical lead 71 connects the electrode to the negative (-) output of high voltage power supply 41. Samples for separation are injected into narrow region 53 of passage 49 on top of the gel column by removing plug 55. The diameter of region 53 as the same diameter of the gel column helps to insure a smooth transition of macromolecule bands into the column without distortion.

Fig. 2B shows an alternative preferred embodiment in which the upper buffer enters from one side as in Fig. 2A, but the inlet passage does not change direction toward the top of the gel column as it does in the embodiment shown by Fig. 2A. In this alternative preferred embodiment there is an upper buffer outlet 60 separate from removable plug 56.

At the other end of the gel column (Fig. 2A) the gel tube fits into elution block 5 in the same manner that it fits into the upper block, and a piece of Zitex filter membrane is used just as at the upper end. The elution block has a chamber 73 called the elution chamber in line with the gel column, and a small passage 75 passes into the elution chamber substantially at a right angle with the long axis of the gel tube. This passage is the elution buffer inlet passage. The elution block fits into lower block 7, an O-ring 77 provides a seal, and a flat sheet of dialysis membrane 79 is placed between the blocks. The dialysis membrane allows buffer ions to pass, but not macromolecules.

The elution block and the lower block are held together in operation by pivot-mounted, spring-loaded clamps, such as clamp 81, in the preferred embodiment. There are number of other ways in which the two blocks may be urged together, and a single lower block could be used with all of the features and passages of the two blocks. In lower block 7 a buffer passage 83 conducts the lower buffer solution to a region just below the dialysis membrane, where the lower buffer is in contact with the elution buffer. Another passage 84 leads away from the elution chamber and goes to an electrode well 85.

The position of the electrode well to one side and downstream from the elution chamber, and the entrance of the lower buffer stream near the lower end of the well, together ensure that electrolysis products formed at the electrode will be carried away without an opportunity to contaminate the elution stream. Moreover, bubbles formed at the electrode, by virtue of the placement of the well, will be swept to the lower buffer outlet rather than to the interface between the elution chamber and the lower buffer.

Because of the small diameter of the elution chamber, even a small bubble at the interface may interrupt electrical conductivity. Bubbles in the elution stream also cause serious difficulties in on-line detection apparatus. A platinum wire loop electrode is positioned in the well by a threaded fitting 87 and electrical lead 89 connects the electrode to the positive terminal of high voltage power supply 41. The lower buffer passage then goes to an outlet at miniature tube fitting 91, and buffer exits via tubing 93.

In operation the upper and lower buffer solutions provide an electrically conductive medium in intimate contact with the electrodes and with the opposite ends of the gel column in gel tube 1, and by virtue of controlled flow, ensure efficient ion exchange and carry away any gas bubbles developed at the electrodes. As macromolecule bands pass from the gel column into the elution chamber, the elution buffer entrains the fraction and carries it into and through the detector, and then to microvolumes for collection.

It was found in testing preliminary designs of the apparatus leading to the design of the preferred embodiments, that care should be taken in specifying the diameter and length of passage 84 so that excesive voltage is not "dropped" over the length of this passage. It is very desireable that the lower filament be in a well downstream, and arranged so that electrolysis products and bubbles do not effect the elution buffer, but if the passage from the elution chamber to the filament well is too small in diameter compared to its length, an excessive portion of the total applied voltage output of the programmable power supply will appear across the lenth of that passage, rather than across the length of the gel column.

The percentage of the applied voltage that will appear over the passage length is a function of several variables; among them the magnitude of the applied voltage, the length, diameter, and material of the gel column, the type and concentration of the various buffer solutions, and the passage dimensions mentioned. In the preferred embodiments, passage 84 is about 12 mm long and about 2.5 mm in diameter.

These dimensions ensure that, for the applications described, the voltage across the length of the gel column is at least 90 % of the total applied voltage across the filaments. (Other lower percentages could be tolerated. For ease of interpretation of results however, it is desirable that the bulk of the voltage drop be substantially across the column). It is recognized that for other applications it may be necessary to adjust the length and/or the bore diameter of passage 84.

Several of the above features contribute significantly to superior operation. For example, electrophoresis apparatus is generally not used with on-line detection because it has until now not been possible to elute from a gel column without bubbles and other contamination that render on-line detection impractical. (Bubbles can stop the current flow.) The apparatus of the present invention, however, overcomes these difficulties by several techniques. Helium, which is used as the driving gas, itself helps to prevent bubble formation. Further, the use of a gas to drive the system also provides a pulseless flow stream, while at the same time avoiding the use of an expensive pulseless pumping system. Moreover, the unique design of the downstream lower filament well further helps to overcome problems of bubble formation and other contamination that make on-line detection difficult.

Fig. 2C is a view of upper block 3, gel column 1, elution block 5, and lower block 7 with electrode fittings and buffer fittings not shown. Lower block 7 is represented as being fixed to a frame element, and is thus not readily movable relative to the frame. Upper block 3 is fixed to an L-shaped member 131 with a pivot bore 133. A swivel bolt 135 with a threaded shaft 137 is held in member 131 such that turning the head of the bolt threads the shaft into (and out of) an anchor member 139 that is fixed to the frame. The movement of the threaded shaft causes member 131 to be moved vertically. By raising member 131 upper, block 3 is raised as well, and the upper and lower blocks may be separated, freeing gel column 1. The adjustable arrangement allows gel columns to be prepared off-line and introduced to the electrophoresis apparatus quickly and efficiently. Hence, unlike prior art devices, it is not necessary to cast gels in place. This arrangement of the preferred embodiment also allows gel columns of different gel bore diameters to be placed in the apparatus for different sample procedures.

It will be apparent to those skilled in the art that the threaded screw arrangement shown by Fig. 2C is but one of many ways that the upper and lower assemblies might be spread to allow gel columns to be removed and replaced. There are many other mechanical arrangements that might serve the same purpose.

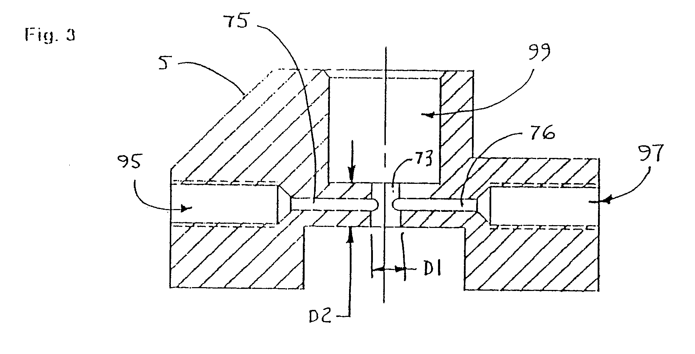

Fig. 3 is an enlarged and sectioned view of elution block 5 rotated so that elution buffer inlet passage 75 is shown in the plane of the view, passing into elution chamber 73. Passage 75 extends into the elution block from a threaded port 95 and intersects elution chamber 73 substantially at a right angle. Directly opposite and colinear with passage 75 another passage 76 of the same diameter extends away from the elution chamber to another threaded port 97. This is the elution buffer outlet passage. In the preferred embodiment passages 75 and 76 are colinear, and of the same diameter, approximately 15 mils. Counterbored well 99 is for assembly to gel tube 1, and the gel tube bottoms in the well so that the end of the tube is at the elution chamber.

In the preferred embodiment the length of the elution chamber, D2, is about 1.4 mm and diameter D1 is about 1mm. It is preferrable that passages 75 and 76 be colinear, but some non-linearity is acceptable. In preparation of lower blocks, a tolerance of one-half the diameter of the elution buffer passages is acceptable.

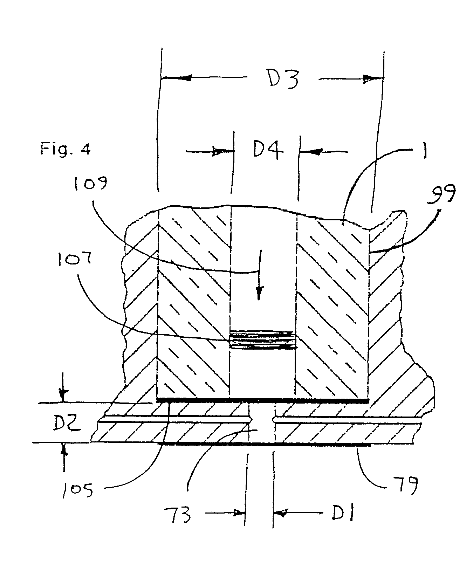

Fig. 4 is an enlargement of a portion of the elution block showing tube well 99 with gel tube 1 in place, a filter membrane 105 between the tube and elution chamber 73, and dialysis membrane 79 in place at the opposite side of the elution chamber. In this view D1 is the diameter of elution chamber 73 as in Fig. 3, which is 1 mm., D3 is the outside diameter of the gel tube, and is 8 mm., and D4 is the inside diameter of the gel tube, which is 2.5 mm. in Fig. 4. Gel tubes with other diameters are also used. D2 is the length of the elution chamber, which is about 1.4 mm.

As stated before, and as may be seen in the cited references relating to gel electrophoresis, it is the presence of an electric field that causes macromolecules to migrate along the gel column and to pass from the end of the column into the elution chamber, and the reaction of different fractions in the common field is responsible for separation. Particular fractions approach the interface between the gel column and the elution chamber in bands. Band 107 in Fig. 4 represents a fraction band moving through the gel column in the direction of arrow 109.

When the fraction band in the gel reaches the interface at membrane 105, the macromolecules begin to pass through the membrane into the elution chamber. Elution buffer is flowing through the elution chamber. In the preferred embodiment, the diameter of the buffer passages approaching and leaving the elution chamber is typically about 15 mils (about .4 mm), the diameter of the elution chamber is 1 mm., and the length of the elution chamber is about 1.4 mm. The volume of the elution chamber is thus about 1 microliter. Buffer in the preferred embodiment is typically passed through the elution chamber at a rate of about 10 microliters per minute, so the buffer content in the elution chamber is "turned over" at a rate of ten times per minute. As a fraction crosses into the elution chamber the macromolecules are entrained in the flowing elution buffer and carried into the outlet passage. The rate at which sample material enters the buffer varies by operation, but a ratio of 1:20 of sample to buffer is typical.

It is known in the art that one characteristic that is helpful in the transition from the gel column into the elution buffer is the presence of a stronger electric field in the elution buffer than in the gel. For example, see Nees, page 193, in the section "Concentration of the Elution Buffer". Nees teaches that the concentration of the elution buffer determines its specific conductivity, which, in turn, influences the electrical field strength in the buffer. Nees suggests the use of an elution buffer of lower concentration than the gel buffer, which results in improved separation and minimal dilution of the separated substances in the elution buffer. He acknowledges several problems that lowering of elution buffer concentration would cause. For example, the yield of eluted substances would be very low due to substance loss through the membrane of the elution chamber. Another is absorption and denaturing phenomena at the membrane in consequence of the Bethe-Toropoff effect. There are additional problems due to low ionic strength, as well. For example, if the buffer concentration in the elution stream is lowered too much, macromolecules such as proteins could precipitate in the apparatus.

Nees proposes a "counter chamber" below the elution chamber with a buffer flowing with a concentration two or three times the concentration of the elution buffer, so a low ionic strength elution buffer may be used.

In the present invention the electric field intensity is managed by the geometry of the elements, so that the concentration of the elution buffer and of the other buffers may be substantially independently chosen, according to other desirable effects. The elution buffer concentration may be set so that the problems caused by a low ionic strength elution buffer are entirely avoided.

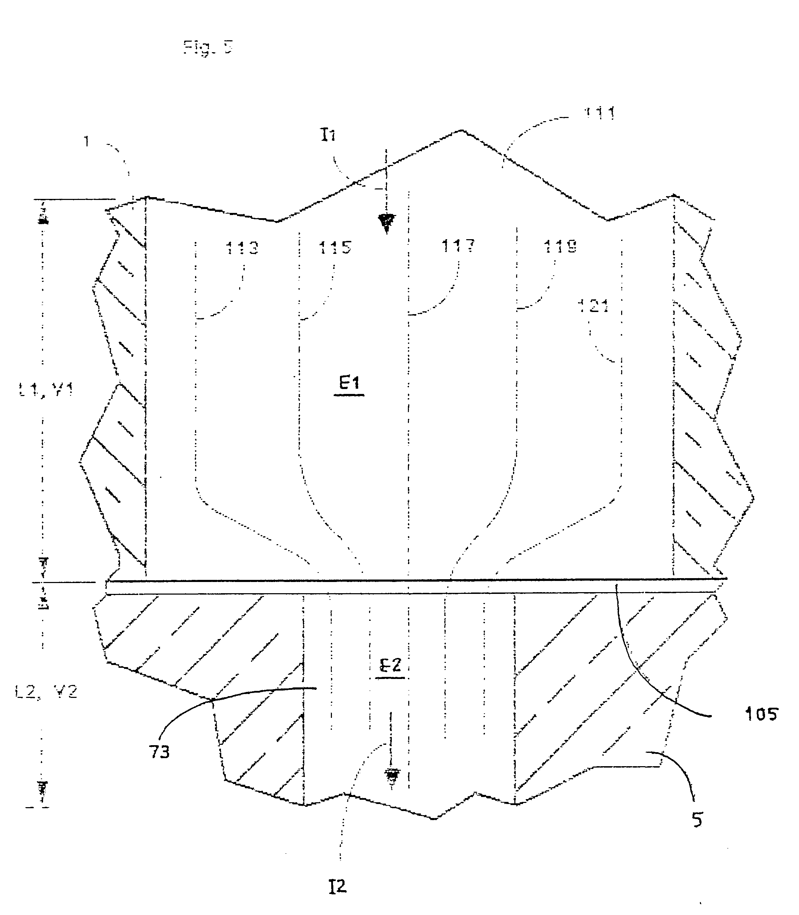

Fig. 5 is an enlarged view of a portion of a gel column 111 confined in the inner diameter of gel tube 1, and a portion of elution chamber 73 at the interface. The gel column and the elution chamber are separated by filter membrane 105, which presents no impediment to the movement of macromolecules from the gel into the buffer in the elution chamber. The diameter of the gel column is 2.5 mm and the diameter of the elution chamber is 1 mm., as in Fig. 4.

A portion of the length of the gel column in Fig. 5, terminating at the filter membrane, is represented by L1. L1 is an arbitrary length, and may be any portion of the gel column length, including the full length. A portion of the length of the elution chamber, terminating also at the filter membrane is represented by L2. L2 is arbitrary as well, and may be any portion of the length of the elution chamber.

In operation a voltage is imposed between the electrodes (Fig. 2), and a current flows through the gel, and through the elution buffer. V1 represents the portion of the voltage "dropped" across the length L1 of the gel, and V2 represents the voltage "dropped" across the length L2 of the elution chamber. I1 is the current flow in the gel and I2 is the current flow in the elution buffer. E1 represents the field strength at any arbitrary point in the gel, and E2 represents the field strength at any arbitrary point in the elution buffer.

By the definition of field strength for an electric field, and assuming that the cross sections of the gel column and the elution chamber are substantially regular and constant, which is the case, then the voltage drop along a length of the gel column is the product of the field strength E1 and the length, and the voltage drop along a length of the elution chamber is the product of the field strength E2 and the length. So:

$$V2 = E2 \times L2; V1 = E1 \times L1$$

By the familiar relationship between voltage, current, and resistance:

$$V2 = I2 \times R2; V1 = I1 \times R1$$

Where R represents electrical resistance.

By substitution:

$$E2 \times L2 = I2 \times R2; E1 \times L1 = I1 \times R1$$

If r represents resistivity, and A represents cross-sectional area:

$$R = (rL)/A$$

Since $r = 1/s$, where s represents conductivity: $R = L/sA$.

By substitution again:

$$E2 \times L2 = (I2 \times L2)/(s2 \times A2); E1 \times L1 = (I1 \times L1)/(s1 \times A1)/L1$$

Rearranging:

$$I2 = (E2 \times L2 \times s2 \times A2)/L2; I1 = (E1 \times L1 \times s1 \times A1)$$

Because the current in each section is the same, $I1 = I2$. So the expressions for I1 and I2 may be equated. Also, the L terms in each expression cancel, leaving:

$$E2 \times s2 \times A2 = E1 \times s1 \times A1$$

Rearrangement produces:

$$E2/E1 = (s1/s2) \times (A1/A2)$$

Hence, it appears that the field strength along the path changes inversely with the change in the conductivity of the medium, and also inversely with the change in the cross sectional area. This is believed to be true regardless of the shape of the path and regardless of the cross-section shape, as long as the cross-section is a constant along the length. In other words, the gel tube and the elution chamber could be curved, and the shape could be square, rectangular, or other shape, and the relationship would still hold. So the ionic strength of the buffer solutions may be optimized for such desirable goals as yield, and the geometry may be managed to produce the optimum increase in field strength to maximize elution efficiency. In practice, it is found generally that the cross-sectional area of the elution chamber at the interface between the elution chamber and the gel column should be less than or equal to the cross-sectional area of the gel column, and it is preferrable if it is less than the cross-sectional area of the gel column. In that way the field in the elution chamber is larger than the field in gel column even if the ionic strength of the buffers is the same.

Five hypothetical flow lines, 113, 115, 117, 119 and 121 are drawn in Fig. 5 to represent the approximate direction of the flow across the interface between the gel column and the elution chamber. The shape of the flow lines indicates what is believed to be the direction of the action of the electric field on the motion of the charged particles in the gel. It is also thought that the change in magnitude of the electric field across the interface helps to avoid problems of "dead" space near the interface at the maximum diameter of the gel column.

Several examples of the use of the micro-preparative apparatus of the invention are presented:

## 1. SDS-PAGE

The separation of proteins in a dissociating buffer system - SDS polyacrylamide gel electrophoresis.

In SDS-PAGE, detergent sodium dodecylsulfate (SDS) was used to dissociate net proteins into their subunits and to bind the polypeptide chains to form a rod-like SDS-polypeptide complex. The great excess of ionized sulfonate groups made the charge on the proteins insignificant, allowing separation according to molecular weight. 10 microliter (60 micrograms) of protein mixture was applied onto a 2.5 mm diameter and 50 mm long 7.5% SDS gel column. Electrophoresis was conducted at room temperature with a voltage ramping program. The voltage was held at 300 V. for 30 minutes, then ramped to 600 Volts over a period of 3 hours. Elution flow rate was adjusted to 12 microliters per minute and monitoring was at 280 nm.

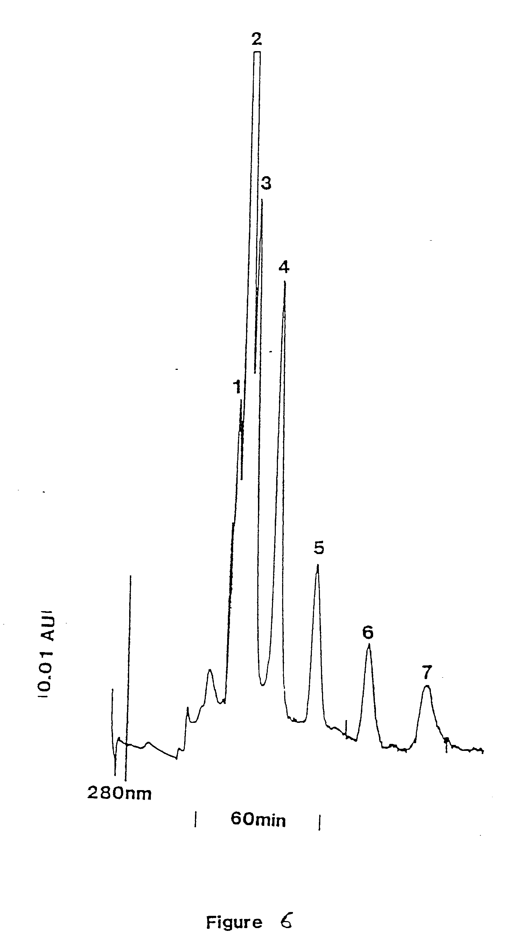

The results are shown in Fig. 6. Peak 1 is Bromophenol blue (tracking dye). Peak 2 is lysozyme, MW 14,000 dalton. Peak 3 is trypsin inhibitor, MW 21,000 dalton. Peak 4 is carbonic anhydrase, MW 29,000 dalton. Peak 5 is ovalbumin, MW 45,000 dalton. Peak 6 is bovine perum albumin, MW 68,000 dalton. Peak 7 is phosphorylase, MW 92,000 dalton.

## 2. Alkaline PAGE

Separation of proteins in a non-dissociating buffer system.

Under alkaline buffer conditions acidic proteins bear negative charges. By introducing the sample from the cathode end of the gel column, negatively charged proteins migrate into the gel and separate according to their charge-to-mass ratio. In this procedure 10 microliter (48 microgram) of protein mixture was applied onto a 3.0 mm diameter by 100 mm long alkaline gel column. Electrophoresis was conducted at 18 degrees Centigrade with 800 V. for 30 minutes, followed by 1000 V. for 5 hours.

Elution flow rate was set at 10 microliters per minute and monitored at 280 nm.

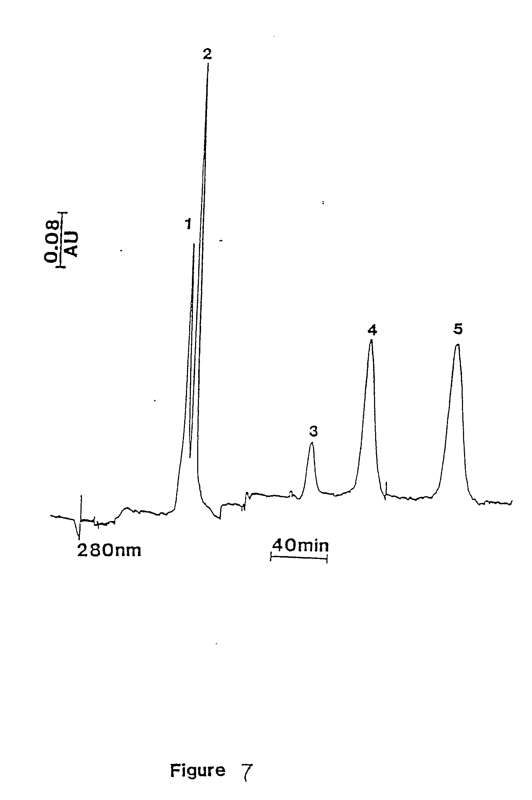

Fig. 7 shows the results. Peak 1 is lactoglobulin A. Peak 2 is lactoglobulin B. Peak 3 is not known. Peak 4 is carbonic anhydrase A. Peak 5 is carbonic anhydrase B.

3. On-Line Activity Assay

Proper substrates and cofactors can be introduced in the elution buffer system for detecting enzyme activities. For example, lactate dehydrogenase (LDH), which catalyzes the reversible oxidation of L-lactate to pyruvate ($CH_3$ CHOHCOO- + $NAD^+$ $CH_3$ COCOO- + NADH + $H^+$), can be easily monitored in the system of the preferred embodiment by adding L-Lactate and $NAD^+$ in the elution buffer. These may be added in the elution buffer reservoir or by other means before the eluent enters the detector portion of the apparatus. The enzyme molecules enter the buffer stream from the gel column and L-Lactate and $NAD^+$ are converted into pyruvate and NADH. NADH has a wavelength maximum at 340 nanometers, so the absorbance tracing at this wavelength represents the formation of NADH and the presence of lactate dehydrogenase (LDH).

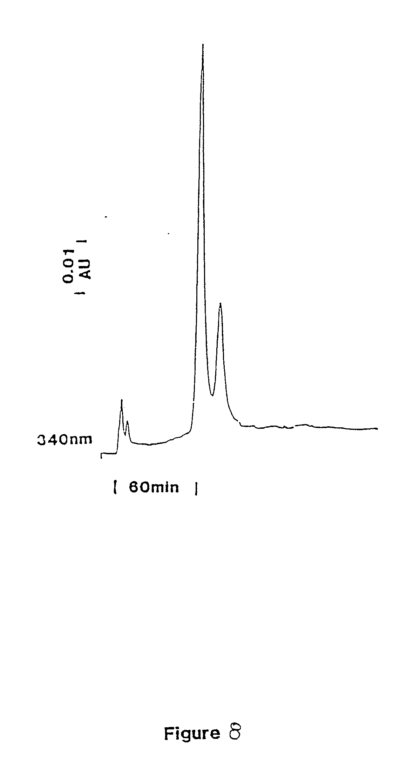

In this case 5 ng (3 microliter) of lactate dehydrogenase (Type VII from human erythrocytes, Sigma Chemical Co.) was applied onto a 1.9 mm diameter by 50 mm long 7.5% alkaline gel column. Electrophoresis was conducted at room temperature and at 500 V. constant voltage for 4 hours. The Elution buffer contained 0.1 M lactate, 1.5 mM NAD +, and 25 mM tris-glycine buffer, pH 8.3, and the flow rate of the elution buffer was set at 10 microliter per minute and monitored at 340 nm. The results are shown in Fig. 8.

The particular use for on-line activity assay in the case of LDH, coupled with the portability, ease of use and automation of the micro-preparative apparatus provides a useful tool for the detection and verification of myocardial infarction incidence in Emergency Room settings. LDH increases dramatically in the blood of victims of myocardial infarction, and separation techniques using blood drawn from suspected heart-attack victims has long been used to determine the incidence and severity of damage done to the heart muscle, although the apparatus used has conventionally been complicated, the procedures relatively slow, and the support of highly trained technicians has been necessary. With the apparatus of the invention, blood sample electrophoresis for presence of the LDH may be done by emergency room personnel in a quick and automated procedure.

The on-line activity mode has other uses as well for diagnostic and analytical medical procedures to determine damage and disease relative to other organs.

4. Separation of synthetic oligonucleotides in denatured PAGE System

Electrophoretic separation of nucleic acids in gel matrix is primarily due to the differences in their molecular sizes. The phosphate groups in the molecules contribute high negative electric charge in alkaline buffer, and the charge to mass ratio is almost the same for all nucleic acids. For separation of short, single-stranded oligonucleotides (up to several hundred-mer) 6-20% polyacrylamide gels are employed, and electrophoresis is carried out in the presence of denaturant.

In this case, 10 microgram (3 microliter) of crude synthetic oligonucleotide was applied onto a 1.9 mm diameter by 200 mm long 20% polyacrylamide gel column. Electrophoresis was conducted at 50 degrees with a voltage program. Voltage was held at 1000 Volts for 70 minutes followed by 1500 volts for 2 hours. Elution flow rate was set at 10 microliters per minute and monitored at 260 nm.

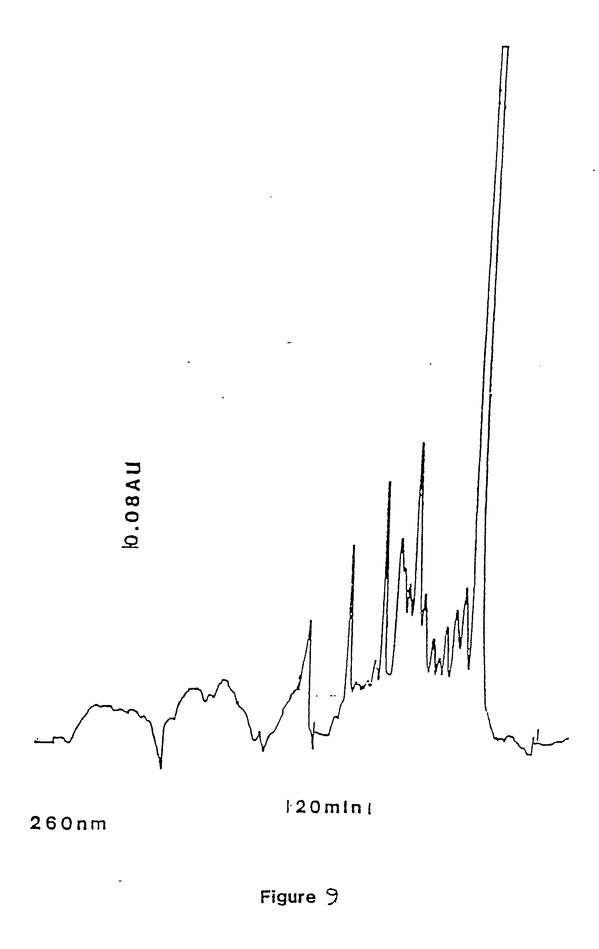

Fig. 9, last peak, shows the isolation of the final synthesized oligonucleotide product, which was 18-bases long. Resolution of single base differences can be acheived in the electrophoresis system.

5. Separation of double-stranded fragments of native DNA in agarose gel.

Separation of large DNA fragments is carried out in agarose gel (0.4 to 1.5%). 1 microgram (2 microliter) of 1 kilobase ladder from yeast 2 micro circle (Bethesda Research Laboratory) was applied onto a 2.5 diameter by 50 mm long 0.5% agarose gel column. Electrophoresis was conducted at 45 V. constant voltage for 8 hours. Elution flow rate was set at 10 microliters per minute and monitored at 260 nm.

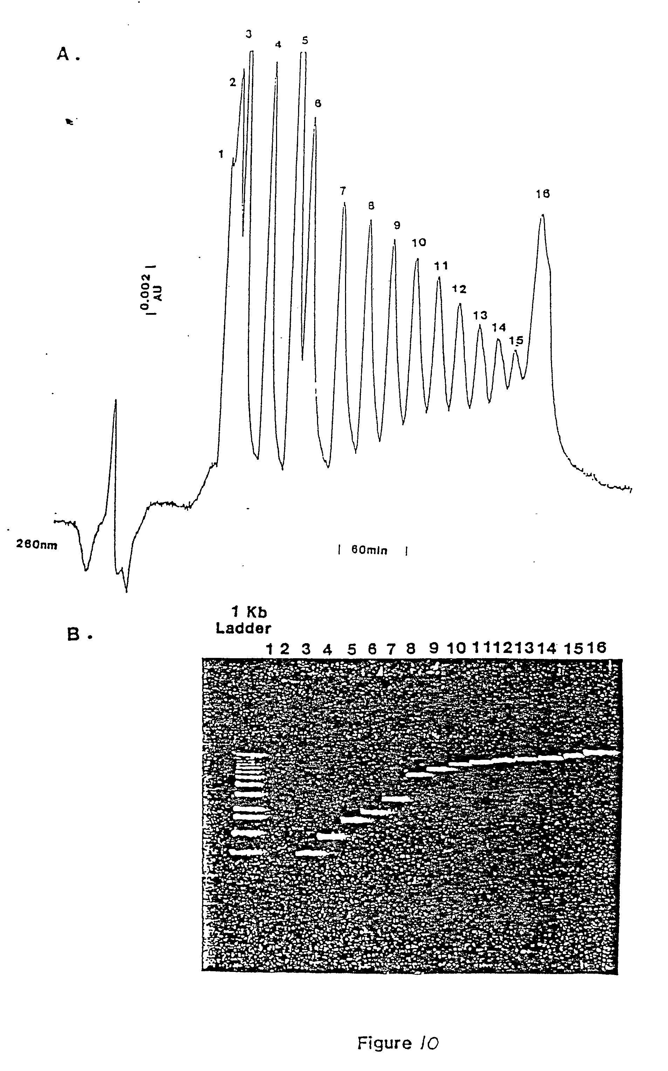

Fig. 10A shows the separation of 1 kilobase DNA ladder, which consists of double-stranded DNA fragments from 400 base pair to 12,000 base pair. The peak fractions recovered from this preparation were subsequently precipitated with ethanol and one third of each peak fraction was applied for analytical agarose gel electrophoresis to verify the identity and homogeneity of each fragment (Fig. 10B).

The examples given represent but a few of the uses and advantages of the apparatus of the invention, and those skilled in the art will recognize many more, and will also be aware that many changes may be made without departing substantially from the spirit and scope of the invention. For example, the diameter of the gel column (the inside diameter of the gel tube) may be varied considerably from the examples provided, and the diameter and length of the elution chamber may be varied as well. It is not required that the gel column and the elution chamber be cylindrical, either; the cylindrical shape is convenient. The principle taught of managing an increase in electrical field by choosing cross-section areas does not depend on a cylindrical gel column or a cylindrical elution chamber.

There are similarly many other changes that may be made without departing from the spirit and scope of the invention. For example, there are many mechanisms that might be used to provide separation and replacement of the upper and lower block assemblies so that gel tubes of differing internal diameters and lengths might be quickly and easily changed for differing analytical purposes. A very broad variety of programs might be employed as well to manage temperature, voltage and current during electrophoresis.

## Claims

1. A preparative gel electrophoresis system comprising:
gel column means for separating macromolecules by electrophoresis, said gel column means comprising a tubing with a gel column cast therein;
an upper block having a bore for receiving an upper end of said gel column and a sample passage open to said bore for placing samples for electrophoresis at the upper end of said gel column with said upper end of said gel column inserted into said bore;
upper buffer solution means for wetting the upper end of said gel column and providing electrical conductivity, said upper buffer solution means comprising an upper buffer solution filling said sample passage;
upper filament means comprising an upper filament immersed in said upper buffer solution, said upper filament for providing one terminal of a high voltage circuit;
a lower block having a bore for receiving a lower end of said gel column and an elution chamber substantially in line with said bore, said lower end of said gel column being adjacent said elution chamber with said lower end inserted in said bore;
elution buffer solution means for carrying eluted material away from said lower end of said gel column, said elution buffer solution means comprising elution buffer flowing in an elution flow passage into and out of said elution chamber such that elution buffer solution flows across said lower end of said gel column and then out of said elution chamber;
lower buffer solution means comprising a lower buffer solution and a flow path in flow passages into and out of said lower block, said flow path separated from said elution buffer chamber by a dialysis membrane; and
lower filament means comprising a lower filament immersed in said lower buffer solution, said lower filament providing a second terminal of said high voltage circuit, said high voltage circuit for providing the electrical driving force for electrophoresis in said system;
said elution chamber being of substantially constant cross section, the area of said elution chamber cross section being equal to or less than the area of cross section of said gel column within said gel column means.

2. A preparative gel electrophoresis system as in claim 1 further comprising gel column holding means for moving said upper block relative to said lower block such that said gel column means may be removed and replaced with separate column having a pre-cast gel therein.

3. A preparative gel electrophoresis system as in claim 1 further comprising elution buffer sample collection means comprising a plurality of sample collection containers for collecting discrete microvolume samples of elution buffer, said sample collection means connected by a fluid conductor to said elution buffer flow passage out of said elution chamber, such that elution buffer flows to said sample collection means after flowing across said lower end of said gel column.

4. A preparative gel electrophoresis system as in claim 3 wherein said plurality of sample collection containers are arranged in a rectangular matrix array and said elution buffer sample collection means further comprises an X-Y-Z carriage, said carriage carrying a needle insertable into each of said plurality of sample collection containers, said carriage driven by actuators to each position in said rectangular matrix array.

5. A preparative gel electrophoresis system as in claim 1 wherein said upper buffer solution means, elution buffer solution means, and lower buffer solution means each further comprises a refillable supply container for buffer solution and a gas supply means for providing a gas under pressure over the solution in the supply container to provide pressure to induce buffer solution flow.

6. A preparative gel electrophoresis system as in claim 5 wherein said gas is chemically inert.

7. A preparative gel electrophoresis system as in claim 1 further comprising a computerized control system for establishing electrophoresis conditions and performing electrophoresis procedures automatically.

8. A preparative gel electrophoresis system comprising:

gel column means for separating macromolecules by electrophoresis, said gel column means comprising a tubing with a gel column cast therein;

an upper block having a bore for receiving an upper end of said gel column and a sample passage open to said bore for placing samples for electrophoresis at the upper end of said gel column with said upper end of said gel column inserted into said bore;

upper buffer solution means for wetting the upper end of said gel column and providing electrical conductivity, said upper buffer solution means comprising an upper buffer solution filling said sample passage;

upper filament means comprising an upper filament immersed in said upper buffer solution, said upper filament for providing one terminal of a high voltage circuit;

a lower block having a bore for receiving a lower end of said gel column and an elution chamber substantially in line with said bore, said lower end of said gel column being adjacent said elution chamber with said lower end inserted in said bore;

elution buffer solution means for carrying eluted material away from said lower end of said gel column, said elution buffer solution means comprising elution buffer flowing in an elution flow passage into and out of said elution chamber such that elution buffer solution flows across said lower end of said gel column and then out of said elution chamber;

lower buffer solution means comprising a lower buffer solution and a flow path in flow passages into and out of said lower block, said flow path separated from said elution chamber by a dialysis membrane; and

lower filament means comprising a lower filament immersed in said lower buffer solution, said lower filament providing a second terminal of said high voltage circuit, said high voltage circuit for providing the electrical driving force for electrophoresis in said system; and

sample detector means for on-line detecting in real time different materials in said elution buffer, said elution buffer flowing in a passage through said sample detector means after passing the lower end of said gel column.

9. A preparative gel electrophoresis system as in claim 8 wherein said lower filament is placed in a filament well, said filament well downstream in said lower buffer solution flow path from said elution chamber, and connected to said elution chamber by a connecting flow passage extending substantially downward from said elution chamber and entering said filament well near the lower end of said filament well, such that any bubble forming at said filament and releasing from said filament will rise in said filament well, but is prevented from rising in said connecting flow passage.

10. A preparative gel electrophoresis system as in claim 8 wherein said on-line detector means comprises an ultraviolet detector for determining the ultraviolet absorbance of samples swept through said detector in said elution buffer stream.

11. A preparative gel electrophoresis system as in claim 8 further comprising elution buffer sample collection means, said elution buffer sample collection means comprising a plurality of sample collection containers for collecting discrete microvolume samples of elution buffer, said sample collection means connected by a fluid conductor to said elution buffer flow passage out of said elution chamber, such that elution buffer flows to said sample collection means after flowing across said lower end of said gel column;

12. A preparative gel electrophoresis system as in claim 11 wherein said plurality of sample collection containers are arranged in a rectangular matrix array and said elution buffer sample collection means further comprises an X-Y-Z carriage, said carriage carrying a needle insertable into each of said plurality of sample collection containers, said carriage driven by electrically powered actuators to each position in said rectangular matrix array.

13. A preparative gel electrophoresis system as in claim 11 wherein said upper buffer solution means, elution buffer solution means, and lower buffer solution means each further comprises a refillable supply container for buffer solution and a gas supply means for providing a gas under pressure over the solution in the supply container to provide pressure to induce buffer solution flow.

14. A preparative gel electrophoresis system as in claim 11 further comprising a computerized control system for establishing electrophoresis conditions and performing electrophoresis procedures automatically.

15. A micropreparative electrophoresis apparatus comprising:

a tube filled with an electrophoretic gel having a cross-sectional area A1;

upper block means for holding one end of said tube, said upper block means for providing an upper buffer to wet the top of said gel and for holding a first electrode in said upper buffer, said upper block means also having sample injection means for introducing sample into said tube;

lower block means for holding another end of said tube, said lower block means comprising:

elution block means for eluting sample from said gel, said elution block means having an elution chamber with a first end located adjacent said gel at said another end of said tube, said elution chamber having a second end and having an inlet buffer passage between said first end and said second end for introducing an elution buffer into said elution chamber, said elution chamber having an outlet buffer passage for permitting said elution buffer along with any eluted sample to exit said elution chamber, said elution chamber having a cross-sectional area A2 which is less than or equal to A1 in a plane located at said first end;

a dialysis membrane sealing said second end of said elution chamber;

lower buffer means adapted to engage said second end of said elution chamber with said dialysis membrane located therebetween, said lower buffer means for wetting said dialysis membrane with a lower buffer, said lower buffer means having a second electrode.

16. A micropreparative electrophoresis apparatus as in claim 15 wherein said elution chamber has a cross-sectional area A3 at its second end, and wherein said lower buffer means comprises a lower buffer inlet passage and a lower buffer outlet passage, with said inlet passage wetting said dialysis membrane in an area $A4 \geq A3$.

17. A micropreparative electrophoresis apparatus as in claim 16 wherein said second electrode is located in said lower buffer outlet passage, and wherein said outlet passage is constructed of a larger diameter than the diameter of the inlet passage.

18. A micropreparative electrophoresis apparatus as in claim 15 further comprising in-line detection means connected to said outlet buffer passage of said elution block means, for detecting eluted sample in real time.

19. A micropreparative electrophoresis apparatus as in claim 15 further comprising temperature control means connected to said tube for controlling the temperature of said tube during eletrophoresis.

20. A micropreparative electrophoresis apparatus comprising:

a tube filled with an electrophoretic gel having a cross-sectional area A1;

upper block means for holding one end of said tube, said upper block means for providing an upper buffer to wet the top of said gel and for holding a first electrode in said upper buffer, said upper block means also having sample injection means for introducing sample into said tube;

lower block means for holding another end of said tube, said lower block means comprising:

elution block means for eluting sample from said gel, said elution block means having an elution chamber with a first end located adjacent said gel at said another end of said tube, said elution chamber having a second end and having an inlet buffer passage between said first end and said second end for introducing an elution buffer into said elution chamber, said elution chamber having an outlet buffer passage for permitting said elution buffer along with any eluted sample to exit said elution chamber, said elution chamber having a cross-sectional area A2 which is less than or equal to A1 in a plane located at said first end;

a dialysis membrane sealing said second end of said elution chamber;

lower buffer means for wetting said dialysis membrane with a lower buffer from a side opposite said elution buffer, said lower buffer means having a second electrode.

21. A micropreparative gel electrophoresis apparatus as in claim 20 further comprising tube holding means for moving said upper block means relative to said lower block means such that said tube may be removed and replaced with separate tube having a pre-cast gel therein.

22. A micropreparative gel electrophoresis apparatus as in claim 20 wherein A2<A1.

23. A micropreparative gel electrophoresis apparatus as in claim 20 further comprising Helium gas means for driving said upper buffer, said elution buffer, and said lower buffer with Helium gas.

FIG.1

MAIN POWER

MAIN POWER SUPPLY 47

POWER

POWER

CPU & DRIVERS 15

DATA

HIGHT VOLTAGE POWER SUPPLY 41

GAS INPUT 29

MANUAL REGULATION 31

MANUAL REGULATION 33

VALVE 35

VALVE 39

VALVE 11

IN   ⊖ OUT 3

UPPER BUFFER 9

HEATER COOLER 43

1

TEMP. PROBE 45

VENT

WASTE 13

IN   OUT 5

DETECTOR 19

IN   ⊕ OUT 7

VENT

VALVE 25

VALVE 37

VENT

ELUTION BUFFER 17

LOWER BUFFER 23

WASTE 27

FRACTION COLLECTOR 21

EP 0 382 426 A2

FIG. 2A

UPPER BUFFER OUTLET

REMOVABLE PLUG FOR SAMPLE INJECTION

⊖ ELECTRODE

UPPER BUFFER INLET

GEL

SPRING-LOADED CLAMP

LOWER BUFFER OUTLET

LOWER BUFFER INLET

⊕ ELECTRODE

Fig. 2B

56

REMOVABLE
PLUG FOR
SAMPLE
INJECTION

UPPER
ELECTRODE

UPPER
BUFFER
OUTLET

60

UPPER
BUFFER
INLET

ZITEX SEAL

GEL

TUBE

SPRING-LOADED
CLAMPS

ZITEX SEAL

DIALYSIS
MEMBRANE

LOWER
BUFFER
OUTLET

LOWER
BUFFER
INLET

LOWER
ELECTRODE

ELUTION
BUFFER
INLET

Fig. 2C

Fig. 3

95    5    75    99    76    97    73    D1    D2

EP 0 382 426 A2

Fig. 4

Fig. 5

Figure 6

EP 0 382 426 A2

Figure 7

Figure 8

Figure 9

Figure *IO*

Fig. 11

Fig. 12

Fig. 13